# EUROPEAN PATENT SPECIFICATION

(11) **EP 3 194 795 B1**
(45) Date of publication and mention of the grant of the patent: **11.12.2019**
(21) Application number: 15751197.3
(22) Date of filing: 03.08.2015
(51) Int. Cl.: F16B 5/02, F16B 37/04

(54) **COMPENSATION NUT FASTENER ASSEMBLY**
BEFESTIGUNGSANORDNUNG FÜR AUSGLEICHSMUTTER
ENSEMBLE FIXATION D'ÉCROU DE COMPENSATION

(30) Priority: 18.09.2014 US 201462052028 P
(43) Date of publication of application: 26.07.2017
(73) Proprietor: Illinois Tool Works Inc., Glenview, IL 60025 (US)
(72) Inventor: SHERRILL, Alexander W., Glenview, Illinois 60025 (US); CAPITO, Jr., Nicholas, Glenview, Illinois 60025 (US); DOBSON, Jason, Glenview, Illinois 60025 (US); GERLACH, Todd, Glenview, Illinois 60025 (US); GIMMY, Kent S., Glenview, Illinois 60025 (US)
(74) Representative: HGF Limited
(86) International application number: PCT/US2015/043365
(87) International publication number: WO 2016/043854

(56) References cited:
- EP-A1- 1 180 605
- DE-U1-202005 009 017
- US-A1- 2010 303 582

## Description

### RELATED APPLICATIONS

This application relates to and claims priority benefits from U.S. Provisional Patent Application No. 62/205,028 entitled "Compensation Nut Fastener Assembly," filed September 18, 2014.

### FIELD OF EMBODIMENTS OF THE DISCLOSURE

Embodiments of the present disclosure generally relate to fastener assemblies, and more particularly to compensation nut fastener assemblies that are configured to accommodate gaps between components, such as panels.

### BACKGROUND

In various industrial applications, components are connected together through the use of fasteners. In some applications, a gap may exist between the components. For example, two panels may be separated by a clearance area or gap in which portions of other components may reside. When connecting the panels together, a fastener assembly may rattle or slip within the gap, thereby generating undesired noise and providing a loose connection.

Additionally, fasteners may be welded to components in order to provide a secure connection between the components. However, welding may be labor and time intensive, thereby adding time and cost to a manufacturing process.

Some fastener assemblies employ a torque clip, which may include a body configured to be inserted into a fastener-receiving channel of a nut. The main body may be tubular, having one or more longitudinal recesses formed therein. The torque clip is configured to center and hold a fastener, such as a bolt or screw, as the fastener is inserted into the fastener-receiving channel. The torque clip ensures that the fastener remains in place and does not dislodge from the nut. The torque clip may be a plastic sleeve used to grip a fastener during an installation process. A known torque clip is described in United States Patent No. 5,395,194, entitled "Convoluted Bolt Retainer," or in DE 20 2005 009 017 U1.

In known assemblies, a torque clip is susceptible to slipping within a top nut when a bolt (or other such fastener) threadably engages the fastener assembly. Further, when the bolt is removed from the fastener assembly, the torque clip is susceptible to being removed along with the bolt. For example, as the bolt is pulled out of a nut, the torque clip may remain connected to the bolt and may be pulled out of the nut along with the bolt. Also, known compensation nut fastener assemblies typically include a separate and distinct O-ring that is used to prevent the top nut from jamming with a bottom nut.

Accordingly, a need exists for a reliable and robust torque clip that is configured to be used with a compensation nut fastener assembly.

### SUMMARY OF EMBODIMENTS OF THE DISCLOSURE

The embodiments according to the invention provide a compensation nut fastener assembly that includes a first nut including a first channel, a second nut including a second channel configured to receive a portion of the first nut, and a torque clip including at least one securing member radially extending from the shaft. The shaft is securely fixed within the first channel. The securing member(s) includes a fixing clip that securely fixes the torque clip to the first nut, and an offset tab that defines a minimum offset distance between the first nut and the second nut.

The fixing clip prevents the torque clip from rotating in relation to the first nut. Also, the fixing clip prevents the torque clip from dislodging from the first nut when a fastener is removed from the compensation nut fastener assembly.

The securing member(s) may also include an extension beam connected to the fixing clip and the offset tab. In at least one embodiment, the fixing clip includes a ramped surface connected to a ledge. The ledge is configured to securely hook onto a portion of the first nut. The offset tab may be configured to abut into an edge of the second nut. In at least one embodiment, a first securing member is linearly aligned with a second securing member.

The first nut may include a collar having a recessed track formed therein. The securing member(s) may be retained within at least a portion of the recessed track. At least one opening may be formed through the recessed track. The fixing clip and the offset tab may extend through the opening(s).

In at least one embodiment, the second nut may include a panel-engaging member. For example, the panel-engaging member may be resilient tabs, stanchions, posts, studs, clips, and/or the like.

Certain embodiments of the present disclosure provide a torque clip configured to be securely fixed to a first nut of a compensation nut fastener assembly. The torque clip may include a shaft, and at least one securing member radially extending from the shaft. The main body may be securely fixed within the first channel. The securing member(s) may include a fixing clip configured to securely fix the torque clip to the first nut, and an offset tab that defines a minimum offset distance between the first nut and the second nut.

### BRIEF DESCRIPTION OF SEVERAL VIEWS OF THE DRAWINGS

Figure 1 illustrates a perspective view of a compensation nut fastener assembly secured between two panels in an initial position, according to an embodiment of the present disclosure.
Figure 2 illustrates a perspective view of a first nut of a compensation nut fastener assembly moved toward a first panel, according to an embodiment of the present disclosure.
Figure 3 illustrates a perspective view of a compensation nut fastener assembly securely bracing a first panel with respect to a second panel, according to an embodiment of the present disclosure.
Figure 4 illustrates a perspective front view of a compensation nut fastener assembly positioned between two panels, according to an embodiment of the present disclosure.
Figure 5 illustrates a lateral view of a compensation nut fastener assembly positioned between two panels, according to an embodiment of the present disclosure.
Figure 6 illustrates a perspective rear view of a compensation nut fastener assembly positioned between two panels, according to an embodiment of the present disclosure.
Figure 7 illustrates a perspective top view of a torque clip, according to an embodiment of the present disclosure.
Figure 8 illustrates a top plan view of a torque clip, according to an embodiment of the present disclosure.
Figure 9 illustrates a cross-sectional view of a torque clip through line 9-9 of Figure 8, according to an embodiment of the present disclosure.
Figure 10 illustrates a top plan view of a compensation nut fastener assembly, according to an embodiment of the present disclosure.
Figure 11 illustrates an exploded cross-sectional view of a compensation nut fastener assembly, according to an embodiment of the present disclosure.
Figure 12 illustrates a cross-sectional view of a compensation nut fastener assembly through line 12-12 of Figure 10, according to an embodiment of the present disclosure.
Figure 13 illustrates a perspective lateral view of a compensation nut fastener assembly, according to an embodiment of the present disclosure.
Figure 14 illustrates a perspective lateral view of a compensation nut fastener assembly, according to an embodiment of the present disclosure.
Figure 15 illustrates a perspective lateral view of a compensation nut fastener assembly, according to an embodiment of the present disclosure.

All embodiments mentioned here are according to the invention. Before the embodiments of the disclosure are explained in detail, it is to be understood that the disclosure is not limited in its application to the details of construction and the arrangement of the components set forth in the following description or illustrated in the drawings. The disclosure is capable of other embodiments and of being practiced or being carried out in various ways. Also, it is to be understood that the phraseology and terminology used herein are for the purpose of description and should not be regarded as limiting. The use of "including" and "comprising" and variations thereof is meant to encompass the items listed thereafter and equivalents thereof as well as additional items and equivalents thereof.

### DETAILED DESCRIPTION OF EMBODIMENTS OF THE DISCLOSURE

Embodiments of the present disclosure provide a compensation nut fastener assembly that includes a torque clip having one or more securing members configured to securely connect the torque clip to a nut. Each securing member includes a fixing clip that is configured to securely fix the torque clip to the nut, and an offset tab that is configured to maintain a minimum offset between the nut and another nut. The fixing clip securely and reliably fixes the torque clip to the nut in order to prevent the torque clip from spinning or otherwise rotating within the nut, and prevent the torque clip from being removed from the nut when a fastener (such as a bolt) is removed from the compensation nut fastener assembly. The offset tab provides a feature that is configured to prevent connected components from jamming. For example, an anti-jam feature may prevent first and second nuts from being over-threaded with respect to one another. The anti-jam feature eliminates, minimizes, or otherwise reduces a need for a separate and distinct O-ring.

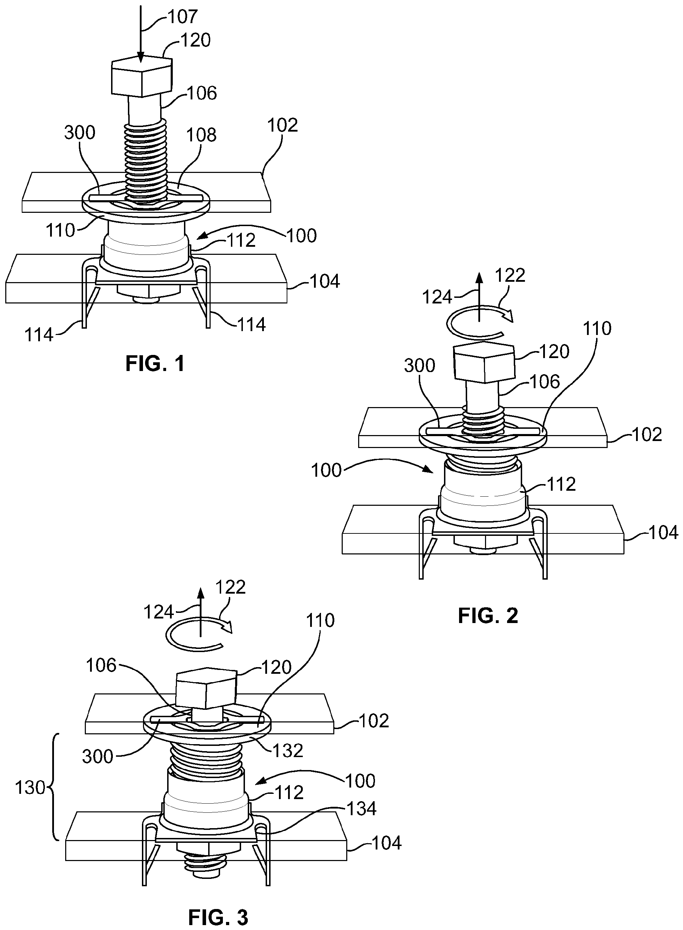

Figure 1 illustrates a perspective view of a compensation nut fastener assembly 100 secured between two panels 102 and 104 in an initial position, according to an embodiment of the present disclosure.

As shown, the assembly 100 includes a first nut 110 and a second nut 112. A torque clip 300, such as described below, is secured to the first nut 110. The second nut 112 may include panel-engaging members, such as stanchions 114, which may be configured to be securely retained within reciprocal features of the panel 104. In general, the first nut 110 may threadably secure to the second nut 112. The second nut 112 may directly connect to the panel 104 through the stanchions 114. Alternatively, the second nut 112 may include various other types of panel-engaging members.

A fastener 106 is urged in the direction of arrow 107 into a fastener-receiving channel 108 of the torque clip 300, which is retained within a channel of the first nut 110. The torque clip 300 is securely locked or otherwise fixed in position with respect to the first nut 110, such as through one or more securing members, as described below. The torque clip 300 may be configured to threadably receive and retain the fastener 106. As the fastener 106 is torqued or rotated into a securing engagement with the first nut 110, the first nut 110 is drawn toward a head 120 of the fastener 106.

Figure 2 illustrates a perspective view of the first nut 110 of the compensation nut fastener assembly 100 moved toward the first panel 102, according to an embodiment of the present disclosure. As the fastener 106 is rotated or torqued in the direction of arc 122, the fastener 106 threadably engages the torque clip 300 and/or the first nut 110 and passes therethrough. At the same time, the threadable engaging rotation of the fastener 106 causes the first nut 110 to move upwardly in the direction of arrow 124.

Figure 3 illustrates a perspective view of the compensation nut fastener assembly 100 securely bracing the first panel 102 with respect to the second panel 104, according to an embodiment of the present disclosure. As the fastener 106 continues to be torqued in the direction of arc 122, the second nut 112 remains securely locked or otherwise fixed and stationary with respect to the panel 104. However, the first nut 110 continues to move toward the panel 102 into a bracing relationship. Accordingly, a gap 130 between the panels is securely and bracingly spanned between a collar 132 of the first nut 110 and a collar 134 of the second nut 112. Threadable engagement between the fastener 106 and the torque clip 300 and/or the first nut 110 causes the first nut 110 to move into a bracing relationship with the panel 102, in order to securely brace the assembly 100 within the gap 130.

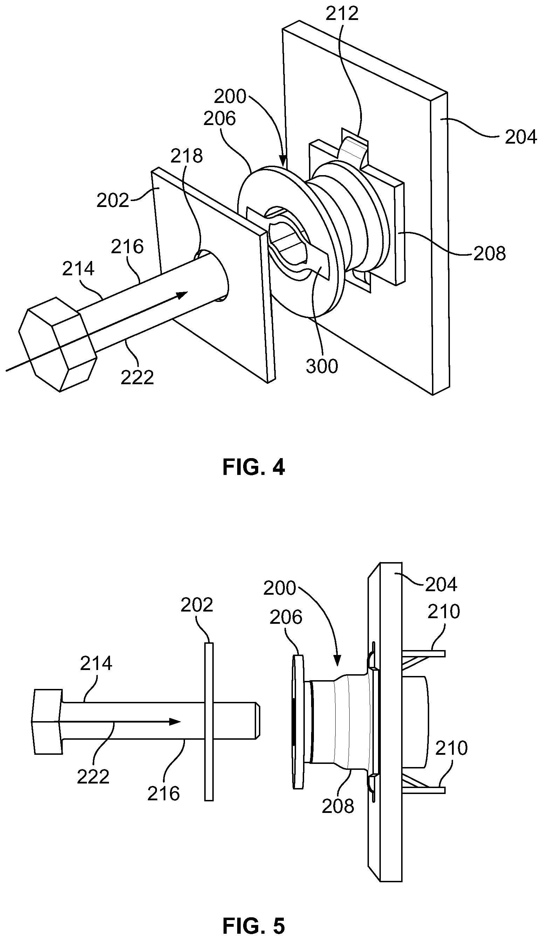

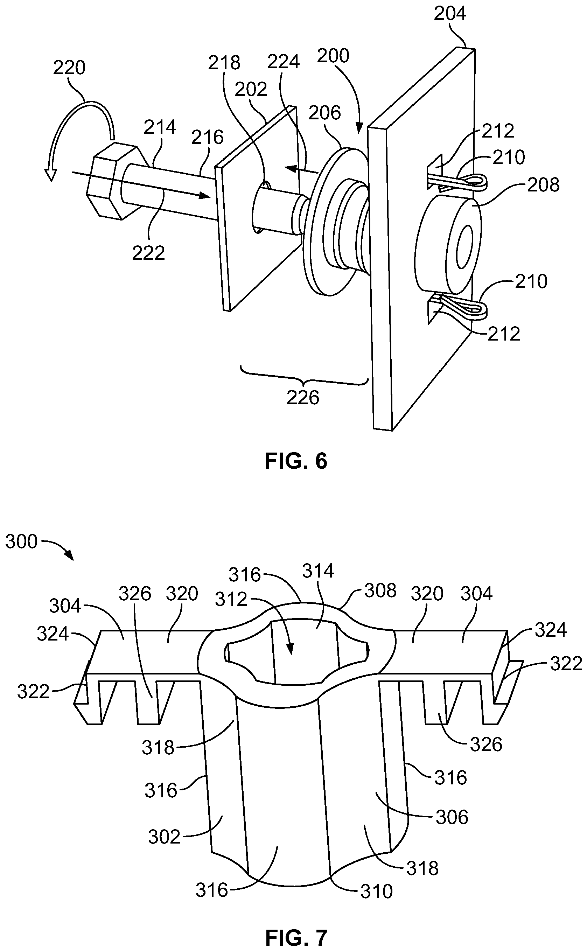

Figure 4 illustrates a perspective front view of the compensation nut fastener assembly 200 positioned between two panels 202 and 204, according to an embodiment of the present disclosure. Figure 5 illustrates a lateral view of the compensation nut fastener assembly 200 positioned between the two panels 202 and 204, while Figure 6 illustrates a perspective rear view of the compensation nut fastener assembly 200 positioned between the two panels 102 and 104. Referring to Figures 4-6, the assembly 100 may include a first nut 206 threadably secured to a second nut 208. The second nut 208 may be securely fixed to the panel 204 through one or more stanchions 210 that are securely retained within openings 212 formed through the panel 204.

A fastener 214 may include a shaft 216 inserted through a hole 218 of the panel 202. The fastener 214 threadably engages the torque clip 300 securely fixed to the first nut 206. As the fastener 214 is torqued in relation to the first nut 206 in the direction of arc 220, the fastener 214 moves into the assembly 200 in the direction of arrow 222. At the same time, the first nut 206 extends or otherwise moves toward the panel 202 in the direction of arrow 224, which is opposite from the direction of arrow 222. As such, the first nut 206 extends into a bracing position with the panel 202, so that the compensation nut fastener assembly 200 is securely braced within a gap 226 between the panels 202 and 204. As such, the bracing relationship of the compensation nut fastener assembly 200 within the gap 226 prevents the assembly 200 from shifting or rattling.

Figure 7 illustrates a perspective top view of the torque clip 300, according to an embodiment of the present disclosure. The torque clip 300 may be integrally formed and molded as a single piece, such as a single piece of injection-molded plastic. The torque clip 300 may include a main body 302 connected to securing members 304. The main body 302 is configured to be received within a central receiving channel of a nut, such as the first nut 110, while the securing members 304 are configured to securely fix the torque clip 300 in position with respect to the first nut 110 and define a minimum offset distance between the first and second nuts 110 and 112.

The main body 302 includes a shaft 306 that extends from a first end 308 (such as a top end) to an opposite second end 310 (such as a bottom end). A fastener channel 312 is formed through the shaft 306 from the first end 308 to the second end 310. The fastener channel 312 is configured to receive a fastener, such as a bolt. In at least one embodiment, at least portions of internal surfaces 314 of the shaft 306 that define the fastener channel 312 may be threaded in order to threadably engage threaded portions of the fastener.

As shown, the shaft 306 may include regularly-spaced outwardly bowed walls 316 that are configured to abut into internal walls of a nut. The bowed walls 316 may be separated by inwardly-recessed walls 318. Alternatively, the shaft 306 may be formed as various other shapes. For example, the shaft 306 may be formed as a cylindrical tube.

Each securing member 304 may be or include an arm, wing, beam, strap, panel, or the like radially and outwardly extending from the first end 308 of the shaft 306. Top surfaces of the securing members 304 may be flush with an upper edge of the first end 308. Each securing member 304 may include an extension beam 320 radially extending from the first end 308. A fixing clip 322 may downwardly extend from a distal end 324 of the extension beam 320. A supporting or offset tab 326 may downwardly extend from the extension beam 320 inboard from the fixing clip 322. For example, the supporting or offset tab 326 may be closer to the shaft 306 than the fixing clip 322.

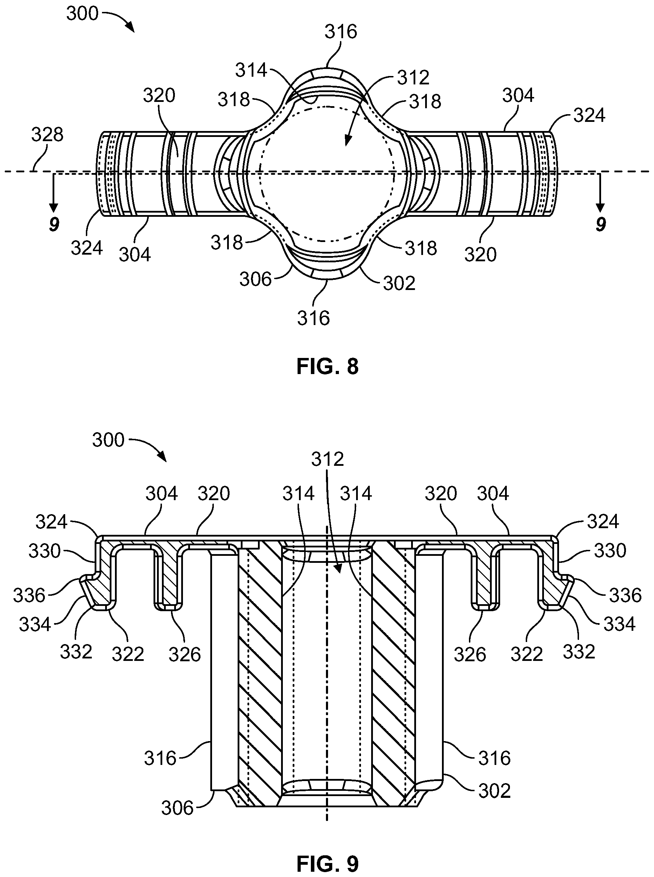

Figure 8 illustrates a top plan view of the torque clip 300. As shown, the shaft 306 may include four regularly spaced outwardly-bowed walls 316 separated by four regularly spaced inwardly-recessed walls 318. Alternatively, the shaft 306 may include greater or lesser walls 316 and 318 than shown. Further, as noted above, the shaft 306 may be shaped in a different manner than shown.

The torque clip 300 may include two linearly aligned securing members 304. For example, the securing members 304 may be linearly aligned along a central axis 328 of the torque clip 300. Alternatively, the torque clip 300 may include more or less securing members 304 than shown. For example, the torque clip 300 may include three or more securing members 304. In at least one other embodiment, the torque clip 300 may include only one securing member 304.

Figure 9 illustrates a cross-sectional view of the torque clip 300 through line 9-9 of Figure 8. The extension beams 320 of the securing members 304 may provide a flat planar surface that is configured to be flush with a top surface of a nut. For example, the securing members 304 may be configured to be received and retained within reciprocal recesses formed within a top surface of the nut.

Each fixing clip 322 may include a beam 330 that downwardly extends from the extension beam 320 at a right angle. A distal end 332 of each fixing clip 322 may include a ramped outer surface 334 that connects to a ledge 336 that may be parallel with the extension beam 320.

Each supporting or offset tab 326 may be a flat, planar beam that downwardly extends from the extension beam 320 at a right angle. As shown, the offset tab 326 may be inboard (that is, closer to the shaft 306) from the fixing clip 322. In operation, the offset tabs 326 provide a bracing support between first and second nuts that prevents jamming of the nuts and components secured thereto. In at least one another embodiment, the offset tabs may be configured as additional fixing clips (such as the fixing clips) to provide increased retaining strength with respect to a nut.

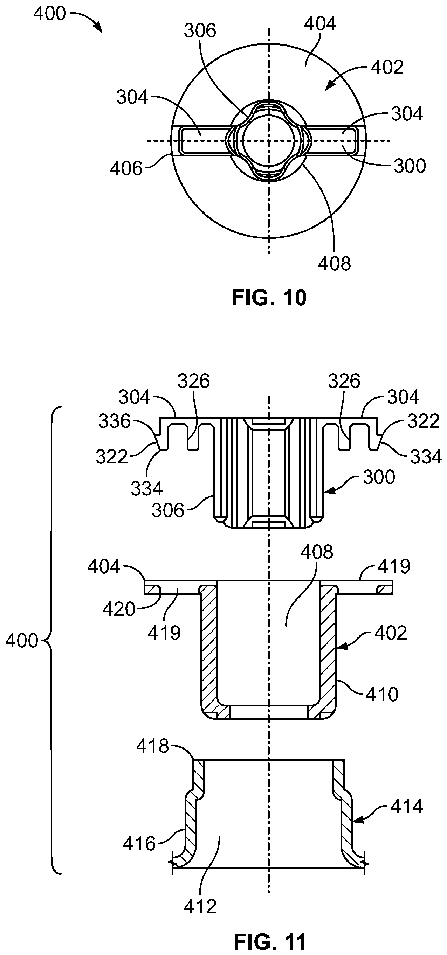

Figure 10 illustrates a top plan view of a compensation nut fastener assembly 400, according to an embodiment of the present disclosure. The compensation nut fastener assembly 400 may be configured to operate the same as described above with respect to Figures 1-6.

The compensation nut fastener assembly 400 includes a first nut 402 and a second nut (hidden from view in Figure 10). The torque clip 300 is secured to the first nut 402. The first nut 402 may include a collar 404 having a linear recessed track formed along a diameter thereof. The securing members 304 of the torque clip 300 may be retained within the recessed track. The shaft 306 of the torque clip 300 is retained within a channel 408 of the first nut 402.

Figure 11 illustrates an exploded cross-sectional view of the compensation nut fastener assembly 400, according to an embodiment of the present disclosure. As shown, the first nut 402 includes a tube 410 that downwardly extends from the collar 404. The tube 410 defines the channel 408 into which the shaft 306 of the torque clip 300 is retained.

The tube 410 of the first nut 402 is configured to be received and retained within a channel 412 of a second nut 414. The channel 412 is defined by an outer circumferential wall 416 having an upper edge 418.

The collar 404 of the first nut 402 may include openings 419 formed therethrough. The openings 419 are configured to allow the fixing clip 322 and the offset tab 326 of the securing members 304 to pass therethrough. In at least one embodiment, each openings 419 may be slightly wider than the fixing clips 322 and the offset tabs 326 in order to allow the fixing clips 322 and the offset tabs 326 to pass into the openings 419 (such as through an interference fit), and prevent rotation of the torque clip 300 in relation to the first nut 402. As the fixing clips 322 pass through the openings 419, the ramped over surfaces 334 slide over outboard internal edges 420 that partially define the openings 419 and deflect inwardly until the ledges 336 engage lower surfaces of the collar 404, thereby allowing the securing members 304 to flex back to their at rest positions, and snapably secure the securing members 304 (and therefore the torque clip 300) into a secure fixed position in relation to the first nut 402.

The offset tabs 326 extend through the openings 419 and abut into the upper edges 418 of the second nut 414, thereby defining a minimum offset distance between the first nut 402 and the second nut 414. For example, the offset tabs 326 bottom out on the upper edges 418, thereby defining a minimum offset distance between the collar 404 of the first nut 402 and the upper edges 418 of the second nut 414. In this manner, the offset tabs 326 provide bracing offsets that prevent or otherwise reduce the possibility of the first and second nuts 402 and 414 jamming. The offset tabs 326 are configured to bottom out on the upper edges 418 of the second nut 414 to prevent the first nut 402 from over-threading onto the second nut 414.

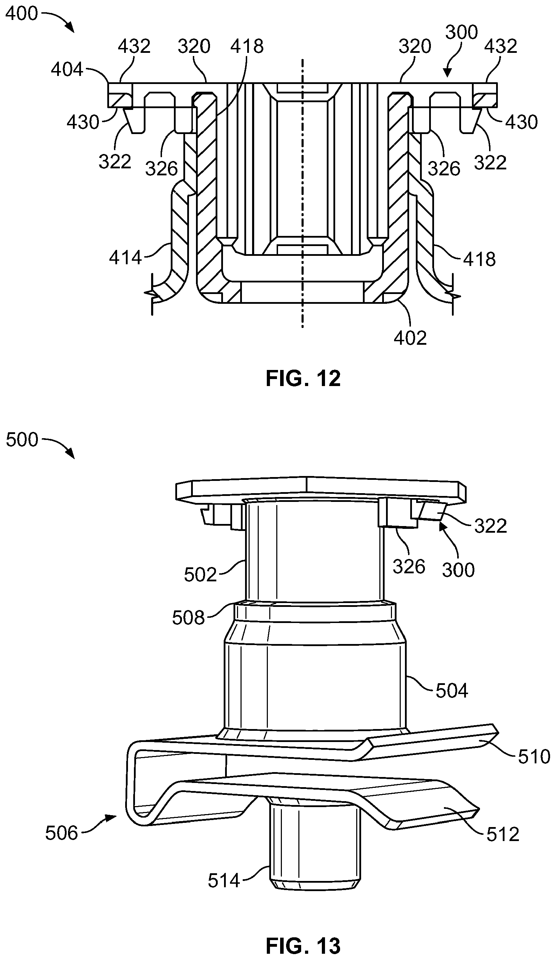

Figure 12 illustrates a cross-sectional view of the compensation nut fastener assembly 400 through line 12-12 of Figure 10, according to an embodiment of the present disclosure. As shown, the torque clip 300 is securely fixed with respect to the first nut 402. The fixing clips 322 are hooked underneath the collar 404, such as by the ledges 336 abutting into the lower surface 430 of an outer rim 432. The engagement between the fixing clips 322 and the collar 404 prevents the torque clip 300 from rotating relative to the first nut 402. Further, the fixing clips 322 prevent the torque clip 300 from dislodging from the first nut 402, due to the ledges 336 hooking underneath the collar 404.

The offset tabs 326 abut into the upper edges 418 of the second nut 414, which bracingly offsets the first nut 402 from the second nut 414. As such, the offset tabs 326 provide anti-jam features that prevent the first nut 402 from being over-torqued in relation to the second nut 414. That is, the offset tabs 326 engage the upper edges 418 to provide a minimum offset between the first and second nuts 402 and 414.

The offset tabs 326 may be shorter or longer than shown. In general, the offset tabs 326 may be sized based on a desired minimum separation between the collar 404 of the first nut 402 and the upper edge 418 of the second nut 414.

The upper surfaces of the extension beams 320 may be flush with an upper surface of the collar 404. The recessed track (shown in Figure 10) formed within the collar 404 may have a height that equals the thickness of the extension beams 320. Alternatively, the extension beams 320 may not be flush with the upper surface of the collar 404.

The torque clip 300 applies torque to the first nut 402. When the torque clip 300 is locked in place with respect to the nut 402, such as through the fixing clips 322, the torque clip 300 is prevented from rotating or otherwise spinning within the first nut 402. Further, the fixing clips 322, for example, ensure that the torque clip 300 remains within the first nut 402 when a bolt or other such fastener is removed from the compensation nut fastener assembly 400.

The offset tabs 326, which provide an anti-jam feature, ensures a minimum offset distance between the first nut 402 and the second nut 414, thereby preventing any jamming/locking of parts when the first nut 402 is secured to the second nut 414. The offset tabs 326 eliminate the need for a separate and distinct O-ring, such as found in known compensation nut fastener assemblies, which were previously used to prevent jamming.

While not shown in Figures 10-12, the second nut 414 may connect or be formed with a panel-engaging member. For example, the panel-engaging member may be or include opposed leaf springs, panels, stanchions, posts, and/or the like that are configured to securely engage a panel.

Figure 13 illustrates a perspective lateral view of a compensation nut fastener assembly 500, according to an embodiment of the present disclosure. The compensation nut fastener assembly 500 includes a first nut 502 secured to a second nut 504. The torque clip 300 is securely fixed to the first nut 502, as described above.

The second nut 504 may include a panel-engaging member 506 that is distally located from an upper edge 508. The panel-engaging member 506 may include opposed spring tabs 510 and 512 that are configured to compressively sandwich a portion of a panel therebetween. The panel-engaging member 506 may also include a downwardly-extending stud 514 that is configured to be received within a reciprocal hole of a component. The stud 514 may define a threaded internal passage that is configured to threadably engage a threaded portion of a shaft of a bolt, for example.

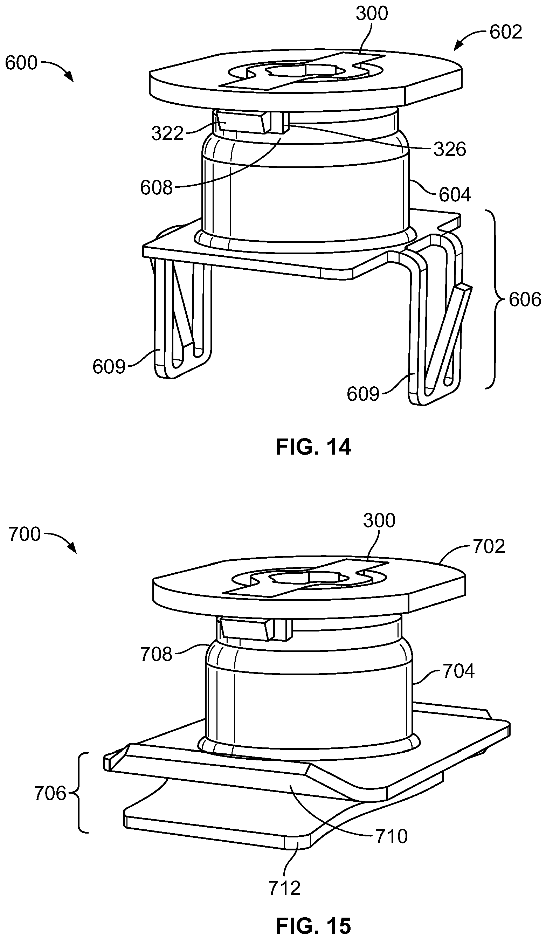

Figure 14 illustrates a perspective lateral view of a compensation nut fastener assembly, according to an embodiment of the present disclosure. The compensation nut fastener assembly 600 includes a first nut 602 secured to a second nut 604. The torque clip 300 is securely fixed to the first nut 602, as described above.

The second nut 604 may include a panel-engaging member 606 that is distally located from an upper edge 608. The panel-engaging member 606 may include stanchions 609 that are configured to securely engage portions of a panel.

Figure 15 illustrates a perspective lateral view of a compensation nut fastener assembly 700, according to an embodiment of the present disclosure. The compensation nut fastener assembly 700 includes a first nut 702 secured to a second nut 704. The torque clip 300 is securely fixed to the first nut 702, as described above.

The second nut 704 may include a panel-engaging member 706 that is distally located from an upper edge 708. The panel-engaging member 506 may include opposed spring tabs 710 and 712 that are configured to compressively sandwich a portion of a panel therebetween.

Figures 13-15 illustrate examples of panel-engaging members. Various other types of panel-engaging members may be used. For example, a panel-engaging member may include tabs, slots, studs, barbs, latches, clamps or the like that are configured to contact a portion of a panel. Also, as noted, the compensation nut fastener assembly may not include a panel-engaging member as shown and described with respect to Figures 13-15.

As described above with respect to Figures 1-15, embodiments of the present disclosure provide a compensation nut fastener assembly that includes a torque clip having one or more securing members configured to securely connect the torque clip to a nut, and/or prevent jamming of components. In at least one embodiment, the securing member(s) include a fixing clip that is configured to securely fix the torque clip to the nut. In at least one embodiment, the securing member(s) may include an offset tab that is configured to define a minimum offset distance between the nut and another nut.

While various spatial and directional terms, such as top, bottom, lower, mid, lateral, horizontal, vertical, front and the like may be used to describe embodiments of the present disclosure, it is understood that such terms are merely used with respect to the orientations shown in the drawings. The orientations may be inverted, rotated, or otherwise changed, such that an upper portion is a lower portion, and vice versa, horizontal becomes vertical, and the like.

Variations and modifications of the foregoing are within the scope of the invention. It is understood that the embodiments disclosed and defined herein extend to all alternative combinations of two or more of the individual features mentioned or evident from the text and/or drawings. All of these different combinations constitute various alternative aspects of the present disclosure. The embodiments described herein explain the best modes known for practicing the disclosure and will enable others skilled in the art to utilize the disclosure. The claims are to be construed to include alternative embodiments to the extent permitted by the prior art.

To the extent used in the appended claims, the terms "including" and "in which" are used as the plain-English equivalents of the respective terms "comprising" and "wherein." Moreover, to the extent used in the following claims, the terms "first," "second," and "third," etc. are used merely as labels, and are not intended to impose numerical requirements on their objects.

The invention is defined by the following claims.

## Claims

1. A compensation nut fastener assembly (100; 200; 400), comprising:
a first nut (110; 206; 402) including a first channel (408);
a second nut (112; 208; 414) including a second channel (412) configured to receive a portion of the first nut (110; 206; 402); and
a torque clip (300) comprising at least one securing member (304),
wherein the at least one securing member (304) comprises a fixing clip (322) that securely fixes the torque clip (300) to the first nut (110; 206; 402),
**characterized in that**
the torque clip (300) comprising a shaft (306), the at least one securing member (304) radially extending from the shaft (306), wherein the shaft (306) is securely fixed within the first channel (408), and the at least one securing member (304) further includes an offset tab (326) that defines a minimum offset distance between the first nut (110; 206; 402) and the second nut (112; 208; 414).

2. The compensation nut fastener assembly of claim 1, wherein the fixing clip (322) prevents the torque clip (300) from rotating in relation to the first nut (110; 206; 402).

3. The compensation nut fastener assembly of claim 1 or 2, wherein the fixing clip (322) prevents the torque clip (300) from dislodging from the first nut (110; 206; 402) when a fastener is removed from the compensation nut fastener assembly.

4. The compensation nut fastener assembly of one of the preceding claims, wherein the at least one securing member (304) further comprises an extension beam (320) connected to the fixing clip (322) and the offset tab (326).

5. The compensation nut fastener assembly of one of the preceding claims, wherein the fixing clip (322) comprises a ramped surface (334) connected to a ledge (336), wherein the ledge (336) is configured to securely hook onto a portion of the first nut (110; 206; 402).

6. The compensation nut fastener assembly of one of the preceding claims, wherein the offset tab (326) is configured to abut into an edge of the second nut (112; 208; 414).

7. The compensation nut fastener assembly of one of the preceding claims, wherein the at least one securing member (304) comprises a first securing member (304) that is linearly aligned with a second securing member (304).

8. The compensation nut fastener assembly of one of the preceding claims, wherein the first nut (110; 206; 402) further comprises a collar (132; 404) having a recessed track formed therein, wherein the at least one securing member (304) is retained within at least a portion of the recessed track.

9. The compensation nut fastener assembly of claim 8, wherein at least one opening (419) is formed through the recessed track, and wherein the fixing clip (322) and the offset tab (326) extend through the at least one opening (419).

10. The compensation nut fastener assembly of one of the preceding claims, wherein the second nut (112; 208; 414) comprises a panel-engaging member (114).

## Patentansprüche

1. Befestigungsanordnung für eine Ausgleichsmutter (100; 200; 400), umfassend:
eine erste Mutter (110; 206; 402), die einen ersten Kanal (408) enthält,
eine zweite Mutter (112; 208; 414), die einen zweiten Kanal (412) enthält, der dazu ausgelegt ist, einen Abschnitt der ersten Mutter (110; 206, 402) aufzunehmen, und
eine Drehmomentklemme (300), die wenigstens ein Sicherungselement (304) umfasst,
wobei das wenigstens eine Sicherungselement (304) eine Befestigungsklemme (322) umfasst, die die Drehmomentklemme (300) sicher an der ersten Mutter (110; 206; 402) befestigt,
**dadurch gekennzeichnet, dass**
die Drehmomentklemme (300) einen Schaft (306) enthält, wobei sich das wenigstens eine Sicherungselement (304) radial von dem Schaft (306) erstreckt, wobei der Schaft (306) sicher in dem ersten Kanal (408) befestigt ist und das wenigstens eine Sicherungselement (304) ferner eine Versatzlasche (326) umfasst, die einen Mindestversatzabstand zwischen der ersten Mutter (110; 206; 402) und der zweiten Mutter (112; 208; 414) definiert.

2. Befestigungsanordnung für eine Ausgleichsmutter nach Anspruch 1, wobei die Befestigungsklemme (322) verhindert, dass sich die Drehmomentklemme (300) in Bezug auf die erste Mutter (110; 206; 402) dreht.

3. Befestigungsanordnung für eine Ausgleichsmutter nach Anspruch 1 oder 2, wobei die Befestigungsklemme (322) verhindert, dass sich die Drehmomentklemme (300) aus der ersten Mutter (110; 206; 402) verlagert, wenn eine Befestigungsvorrichtung aus der Befestigungsanordnung für die Ausgleichsmutter entfernt wird.

4. Befestigungsanordnung für eine Ausgleichsmutter nach einem der vorhergehenden Ansprüche, wobei das wenigstens eine Sicherungselement (304) ferner einen Ausleger (320) umfasst, der mit der Befestigungsklemme (322) und der Versatzlasche (326) verbunden ist.

5. Befestigungsanordnung für eine Ausgleichsmutter nach einem der vorhergehenden Ansprüche, wobei die Befestigungsklemme (322) eine rampenförmige Fläche (334) umfasst, die mit einem Absatz (336) verbunden ist, wobei der Absatz (336) dazu ausgelegt ist, sich sicher an einen Abschnitt der ersten Mutter (110; 206; 402) anzuhaken.

6. Befestigungsanordnung für eine Ausgleichsmutter nach einem der vorhergehenden Ansprüche, wobei die Versatzlasche (326) dazu ausgelegt ist, in einem Rand der zweiten Mutter (112; 208; 414) anzuliegen.

7. Befestigungsanordnung für eine Ausgleichsmutter nach einem der vorhergehenden Ansprüche, wobei das wenigstens eine Sicherungselement (304) ein erstes Sicherungselement (304) umfasst, das in einer Linie mit einem zweiten Sicherungselement (304) ausgerichtet ist.

8. Befestigungsanordnung für eine Ausgleichsmutter nach einem der vorhergehenden Ansprüche, wobei die erste Mutter (110; 206; 402) ferner einen Kragen (132; 404) umfasst, der eine darin ausgebildete vertiefte Spur aufweist, wobei das wenigstens eine Sicherungselement (304) wenigstens in einem Abschnitt der vertieften Spur gehalten ist.

9. Befestigungsanordnung für eine Ausgleichsmutter nach Anspruch 8, wobei wenigstens eine Öffnung (419) durch die vertiefte Spur ausgebildet ist und wobei sich die Befestigungsklemme (322) und die Versatzlasche (326) durch die wenigstens eine Öffnung (419) erstrecken.

10. Befestigungsanordnung für eine Ausgleichsmutter nach einem der vorhergehenden Ansprüche, wobei die zweite Mutter (112; 208; 414) ein Platteneingriffselement (114) umfasst.

## Revendications

1. Ensemble fixation d'écrou de compensation (100; 200; 400), comprenant:
un premier écrou (110; 206; 402) contenant un premier canal (408);
un second écrou (112; 208; 414) contenant un second canal (412) conçu pour recevoir une portion du premier écrou (110; 206; 402); et
un clip de couple (300) contenant au moins un élément de fixation (304), l'au moins un élément de fixation (304) comprenant un clip de fixation (322) qui fixe de manière sûre le clip de couple (300) au premier écrou (110; 206; 402),
**caractérisé en ce que**
le clip de couple (300) comprenant un arbre (306), l'au moins un élément de fixation (304) s'étendant radialement à partir de l'arbre (306), l'arbre (306) étant fixé solidement à l'intérieur du premier canal (408), et l'au moins un élément de fixation (304) comprend en outre une languette de décalage (326) qui définit une distance de décalage minimum entre le premier écrou (110; 206; 402) et le second écrou (112; 208; 414).

2. Ensemble fixation d'écrou de compensation selon la revendication 1, dans lequel le clip de fixation (322) empêche le clip de couple (300) de tourner par rapport au premier écrou (110; 206; 402).

3. Ensemble fixation d'écrou de compensation selon la revendication 1 ou 2, dans lequel le clip de fixation (322) empêche le clip de couple (300) de se déloger du premier écrou (110; 206; 402) lorsqu'un élément de fixation est enlevé de l'ensemble fixation d'écrou de compensation.

4. Ensemble fixation d'écrou de compensation selon l'une des revendications précédentes, dans lequel l'au moins un élément de fixation (304) comprend en outre une barre d'extension (320) reliée au clip de fixation (322) et à la languette de décalage (326).

5. Ensemble fixation d'écrou de compensation selon l'une des revendications précédentes, dans lequel le clip de fixation (322) comprend une surface inclinée (334) reliée à un rebord (336), le rebord (336) étant configuré pour s'accrocher de manière sûre sur une portion du premier écrou (110; 206; 402).

6. Ensemble fixation d'écrou de compensation selon l'une des revendications précédentes, dans lequel la languette de décalage (326) est configurée pour venir en butée dans un bord du second écrou (112; 208; 414).

7. Ensemble fixation d'écrou de compensation selon l'une des revendications précédentes, dans lequel l'au moins un élément de fixation (304) comprend un premier élément de fixation (304) qui est aligné linéairement avec un second élément de fixation (304).

8. Ensemble fixation d'écrou de compensation selon l'une des revendications précédentes, dans lequel le premier écrou (110; 206; 402) comprend en outre un collier (132; 404) dans lequel est formée une piste évidée, dans lequel l'au moins un élément de fixation (304) est retenu dans au moins une partie de la piste évidée.

9. Ensemble fixation d'écrou de compensation selon la revendication 8, dans lequel au moins une ouverture (419) est formée à travers la piste évidée, et dans lequel le clip de fixation (322) et la languette de décalage (326) traversent l'au moins une ouverture (419).

10. Ensemble fixation d'écrou de compensation selon l'une des revendications précédentes, dans lequel le second écrou (112; 208; 414) comprend un élément d'engagement de panneau (114).
